# EUROPÄISCHE PATENTANMELDUNG

(11) **EP 0 785 633 A2**
(43) Veröffentlichungstag der Anmeldung: **23.07.1997**
(21) Anmeldenummer: 96114879.8
(22) Anmeldetag: 17.09.1996
(51) Int. Cl.: H04B 1/38

(54) **Tragbares Gerät mit einem abnehmbaren Clip**

(30) Priorität: 09.01.1996 DE 19600496
(71) Anmelder: ROBERT BOSCH GMBH, 70442 Stuttgart (DE)
(72) Erfinder: Eckardt, Claus-Chr., Dipl.-Designer, 30171 Hannover (DE)

(57) **Zusammenfassung**

Bei einem tragbaren Gerät mit einem abnehmbaren Clip weist der Clip ein Befestigungselement aus einem Schaft und einem Kopfteil auf. Das Funktelefon weist eine Öffnung auf, durch die das Kopfteil in mindestens einer Winkelstellung, die von einer Befestigungsstellung um einen vorgegebenen Winkel abweicht, hindurchtreten kann. Hinter der Öffnung ist ein Hohlraum angeordnet, der eine Drehung des Kopfteils in die Befestigungsstellung erlaubt, wobei das Kopfteil mindestens teilweise die Öffnung hintergreift.

## Beschreibung

Die Erfindung betrifft ein tragbares Gerät mit einem abnehmbaren Clip.

Tragbare Geräte, wie beispielsweise Funktelefone, Funksprechgeräte und Empfänger für Personenrufanlagen, sind häufig mit einem Clip versehen, um eine Befestigung an der Bekleidung, insbesondere an einem Gürtel oder am Rand einer Tasche, zu ermöglichen. Ein solcher Clip wird jedoch häufig auch als störend empfunden.

Aufgabe der Erfindung ist es daher, ein tragbares Gerät mit einem abnehmbaren Clip vorzuschlagen, wobei der Clip in einfacher Weise ohne spezielles Werkzeug abnehmbar sein soll.

Diese Aufgabe wird erfindungsgemäß dadurch gelöst, daß der Clip ein Befestigungselement aus einem Schaft und einem Kopfteil aufweist, daß das Funktelefon eine Öffnung aufweist, durch die das Kopfteil in mindestens einer Winkelstellung, die von einer Befestigungsstellung um einen vorgegebenen Winkel abweicht, hindurchtreten kann, und daß hinter der Öffnung ein Hohlraum angeordnet ist, der eine Drehung des Kopfteils in die Befestigungsstellung erlaubt, wobei das Kopfteil mindestens teilweise die Öffnung hintergreift.

Das erfindungsgemäße Gerät hat außer der einfachen Abnehmbarkeit des Clips den Vorteil, daß keine zusätzlichen Befestigungsteile am Gerät selbst aus dessen Kontur herausragen, die beim Unterbringen des Gerätes, beispielsweise an einer Tasche, stören könnten und auch ästhetisch einen unvorteilhaften Eindruck machen. Auch der Clip selbst ist bei dem erfindungsgemäßen Gerät durch die Befestigungsteile gegenüber einem festen Clip nur unwesentlich vergrößert.

Eine vorteilhafte Ausgestaltung der Erfindung besteht darin, daß das Kopfteil ein Quersteg ist. Vorzugsweise ist bei der Erfindung vorgesehen, daß der vorgegebene Winkel 90° ist.

Um dem Clip einen festen Halt in der Befestigungsstellung zu geben, kann gemäß einer anderen Weiterbildung der Erfindung vorgesehen sein, daß bei der Befestigungsstellung das Kopfteil durch eine Spannung des Clips gegen die die Öffnung bildende Wand des Funktelefons gepreßt wird.

Zusätzlich oder in Verbindung mit dieser Weiterbildung kann die Arretierung des Clips in der Befestigungsstellung dadurch verbessert werden, daß bei der Befestigungsstellung eine Raste vorgesehen ist.

Eine Beeinträchtigung der Funktion des Gerätes durch in die elektronischen Schaltungen einbringende Staubteilchen oder Feuchtigkeit wird bei einer vorteilhaften Ausgestaltung der Erfindung dadurch verhindert, daß der Hohlraum gegenüber weiteren Hohlräumen des Funktelefons abgedichtet ist.

Ein Ausführungsbeispiel der Erfindung ist in der Zeichnung anhand mehrerer Figuren dargestellt und in der nachfolgenden Beschreibung näher erläutert. Es zeigt:
- Fig. 1: eine Rückansicht des Ausführungsbeispiels,
- Fig. 2: eine Seitenansicht,
- Fig. 3: eine Rückansicht des Clips und
- Fig. 4: eine Seitenansicht des Clips in gegenüber den Figuren 1 und 2 vergrößerter Darstellung.

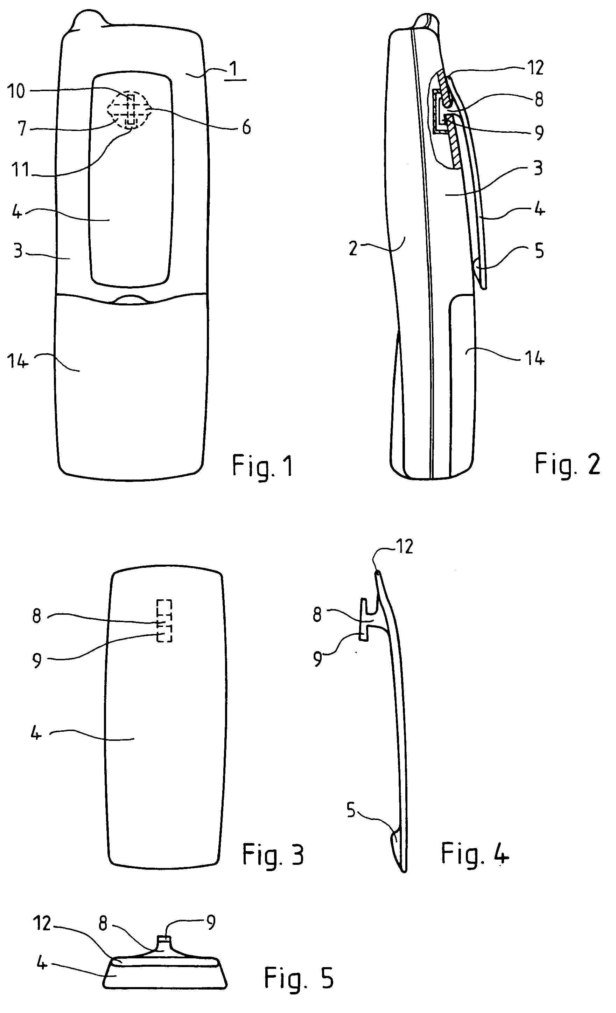

Das in den Figuren 1 und 2 als Ausführungsbeispiel dargestellte Funktelefon 1 weist ein aus zwei Halbschalen 2, 3 bestehendes Gehäuse auf, wobei auf der Frontseite der Halbschale 2 in an sich bekannter Weise Bedienelemente und Schalldurchtrittsöffnungen angeordnet sind. Diese sind jedoch in den Figuren nicht dargestellt, da sie zur Erläuterung der Erfindung nicht notwendig sind. Die rückwärtige Halbschale 3 weist eine Öffnung zum Einsetzen von Batterien auf, die mit Hilfe eines Deckels 14 verschließbar ist.

Zum Tragen des Funktelefons, beispielsweise an einem Gürtel oder an einer Außenseite einer Tasche, ist ein Clip 4 vorgesehen, der im oberen Bereich der Halbschale 3 des Funktelefons 1 befestigt ist und mit einem Nocken 5 unter Spannung im mittleren Bereich auf der Halbschale 3 aufliegt.

Zur Befestigung des Clips 4 befindet sich in der Halbschale 3 eine waagerecht verlaufende längliche Öffnung 6, hinter der ein kreisscheibenförmiger Hohlraum 7 vorgesehen ist. Ein am Clip 4 vorgesehenes Befestigungselement besteht aus einem Schaft 8, der in allen Drehlagen in die Öffnung 6 paßt, und einem Quersteg 7.

Zum Anbringen des Clips 4 am Funktelefon 1 wird dieser gegenüber der Darstellung in den Figuren um 90° gedreht, so daß der Quersteg 9 in die Öffnung 6 eingeführt werden kann. Danach wird der Clip um 90° bis zur dargestellten Stellung gedreht, worauf der Quersteg die in Fig. 1 gezeigte Stellung 10 einnimmt. Die Innenfläche der Halbschale 3 kann im Bereich des Hohlraums 7 derart gestaltet sein, daß zum Einsetzen des Clips keine besondere Druckkraft erforderlich ist, damit der Quersteg 9 die Öffnung 6 hintergreift. Während der Drehung wird jedoch durch das Auftreffen des Nockens 5 auf die Halbschale 3 im Zusammenhang mit der Gestaltung des Clips 4, der Form der Halbschale 3 und der Öffnung 6 der Clip gespannt, so daß der Quersteg 9 gegen die Wand der Halbschale 3 gepreßt wird. Außerdem wird das obere Ende 12 des Clips 4 gegen die Außenfläche der Halbschale 3 gepreßt. Dadurch wird der Clip 4 in der gezeigten Drehstellung verklemmt. Dieses kann dadurch verstärkt werden, daß beispielsweise eine Vertiefung 11 an der Innenfläche der Halbschale 3 im Bereich des Hohlraums 7 angeordnet ist, in welche der Quersteg 9 beim Drehen in die Befestigungsstellung hineingleitet.

## Patentansprüche

1. Tragbares Gerät mit einem abnehmbaren Clip, dadurch gekennzeichnet, daß der Clip (4) ein Befestigungselement aus einem Schaft (8) und einem Kopfteil (9) aufweist, daß das Funktelefon (1) eine Öffnung (6) aufweist, durch die das Kopfteil (9) in mindestens einer Winkelstellung, die von einer Befestigungsstellung um einen vorgegebenen Winkel abweicht, hindurchtreten kann, und daß hinter der Öffnung (6) ein Hohlraum (7) angeordnet ist, der eine Drehung des Kopfteils (9) in die Befestigungsstellung erlaubt, wobei das Kopfteil (9) mindestens teilweise die Öffnung (6) hintergreift.

2. Gerät nach Anspruch 1, dadurch gekennzeichnet, daß das Kopfteil ein Quersteg (9) ist.

3. Gerät nach einem der Ansprüche 1 oder 2, dadurch gekennzeichnet, daß der vorgegebene Winkel 90° ist.

4. Gerät nach einem der vorhergehenden Ansprüche, dadurch gekennzeichnet, daß bei der Befestigungsstellung das Kopfteil (9) durch eine Spannung des Clips (4) gegen die die Öffnung (6) bildende Wand des Funktelefons (1) gepreßt wird.

5. Gerät nach einem der vorhergehenden Ansprüche, dadurch gekennzeichnet, daß bei der Befestigungsstellung eine Raste (11) vorgesehen ist.

6. Gerät nach einem der vorhergehenden Ansprüche, dadurch gekennzeichnet, daß der Hohlraum (7) gegenüber weiteren Hohlräumen des Funktelefons (1) abgedichtet ist.
